# EUROPEAN PATENT SPECIFICATION

(11) **EP 4 667 341 B1**
(45) Date of publication and mention of the grant of the patent: **02.09.2026**
(21) Application number: 24382659.1
(22) Date of filing: 18.06.2024
(51) Int. Cl.: B62K 21/16, B62K 21/24

(54) **ADJUSTABLE BICYCLE STEM ASSEMBLY AND METHOD FOR MOUNTING SAID ASSEMBLY**
EINSTELLBARE FAHRRADLENKERVORBAUANORDNUNG UND VERFAHREN ZUR MONTAGE DER ANORDNUNG
ENSEMBLE TIGE DE BICYCLETTE RÉGLABLE ET PROCÉDÉ DE MONTAGE DUDIT ENSEMBLE

(43) Date of publication of application: 24.12.2025
(73) Proprietor: ORBEA, S. COOP., 48269 Mallabia (BIZKAIA) (ES)
(72) Inventor: ESCARIHUELA ALCOVERRO, Arnau, 48960 Galdakao (ES); ORTUONDO GOROSTIZA-GOIZA, Jon Ander, 48960 Usansolo (ES)
(74) Representative: Cueto, Sénida

(56) References cited:
- CN-U- 214 356 459
- JP-U- H04 123 897
- SE-B- 460 784
- US-A1- 2006 207 382
- US-A1- 2022 017 177
- US-B2- 11 242 108

## Description

### Object of the invention

The present invention belongs to the field of bicycles, and more particularly to the systems for adjusting the position of the handlebar of a bicycle.

A first aspect of the present invention is directed to a stem designed in such a manner as to enable the cyclist to adjust the position of the handlebar in a simple and convenient manner.

A second aspect of the present invention is directed to a method for mounting said stem assembly.

### State of the art

The position of a cyclist onto the bicycle is determined by the position of the handlebar. In urban-style bicycles, the handlebar is frequently adjustable for enabling the cyclist to choose a handlebar position that is comfortable for him/her. Thereto, adjustable stems formed by two tubes connected in a rotatable manner are known. Thus, depending on the relative angular position of both tubes, the position of the handlebar changes both in height and in length.

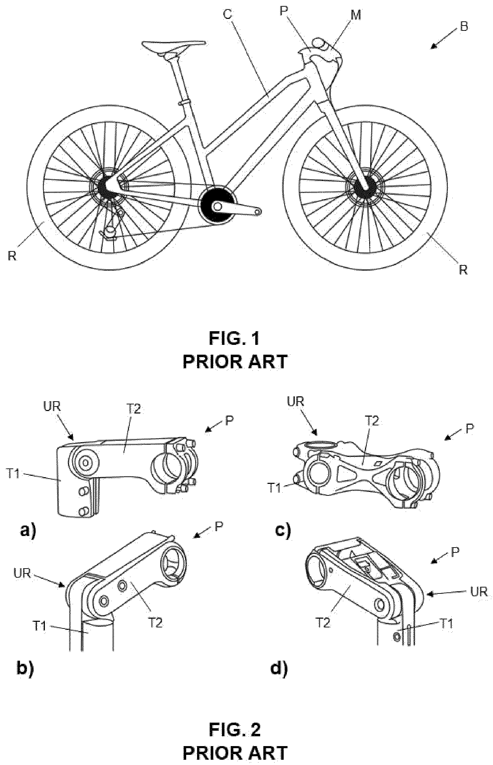

Fig. 1 schematically shows a bicycle (B) formed mainly by a frame (C) and wheels (R). The stem (P) is connected to the forward end of the frame (C), at the front vertical tube. The stem (P) is formed mainly by two tubes forming an angle normally close to 90°. The handlebar (M) is placed at the end of the stem (P) opposite to that where the frame (C) is connected.

As mentioned earlier, adjustable stems (P) allowing for the position of the handlebar (M) are currently known. Figs. 2a-2d show examples of stems (P) of this type. As shown, they are all formed mainly by two tubes (T1, T2) connected by means of a rotatable connection (UR) within the plane of the bicycle (B). Thus, by modifying the angle of the rotatable connection the position of the handlebar (M) is changed.

A drawback of this configuration is that the possible positions of the handlebar are necessarily located along the circular trajectory followed by the front end of the stem as one tube rotates with respect to the other, which is fixed and connected to the frame in an essentially vertical position. That is, these solutions do not enable any modification of the length of the stem, which remains constant irrespective of the angular position of the connection.

Furthermore, the rotatable connection usually employed in these solutions does not allow for the cables to follow a path through the inside of the stem. In this context, it is important to consider that an urban-style bicycle usually has a larger number of cables in comparison with other types of bicycles. Merely as an example, an urban-style bicycle may comprise the following cables: brakes, gear, telescopic seatpost and lights. The provision of the cables at a visible position is not only antiaesthetic, but it can also be cumbersome for the cyclist.

In conclusion, there exist in this field the need for an improved stem solving these drawbacks.

Document US2006/207382 A1 discloses an adjustable stem assembly according to the preamble of claim 1.

### Brief description of the invention

The inventors of the present invention have solved these drawbacks by means of an adjustable stem based on parts designed to be mounted in different positions, each of said positions corresponding to a different position of the handlebar. This configuration not only allows for modifying the height of the stem, but also its length.

In this document, unless the context clearly indicates otherwise, all terms relating to the position or geometric orientation of the different elements forming the invention, such as "*over*", "*under*", *"in front"*, "*behind*", and the like are interpreted with respect to the stem when mounted to a bicycle which, in turn, is in its natural use position.

### First aspect: adjustable stem assembly

A first aspect of the present invention is directed to an adjustable stem assembly for a bicycle mainly comprising the following elements: base, support and separator. Next, each of these elements is disclosed in greater detail.

### a) Base

The base is configured for fixation to the fork of a bicycle, specifically to its upper end. In principle, this fixation may be carried out in several different manners provided it is sufficiently firm to withstand the tensions the stem will be subjected to during its life. The base also comprises a front face that, as disclosed further down in the present document, is designed to allow for the fixation of the support or, alternatively, the separator.

In a particularly preferred embodiment, a lower face of the base comprises a fork fixation means. This fork fixation means may be, for example, an essentially cylindrical element having a rib for connection with the fork with the aid of a compression ring. This cylindrical element is hollow, thereby providing a passage towards the inside of the frame for the cables running through the stem.

In another preferred embodiment of the invention, the base comprises a mobile phone fixation element. This phone fixation element is situated at an upper area of the base, such that the mobile phone is visible for the cyclist during the route.

### b) Support

The support comprises a rear face configured for fixation to the front face of the base alternatively in a first position or in a second position, where the first position and the second position are separated 180° around an axis perpendicular to said rear face of the support. Further, when mounted in a bicycle, a perpendicular to the rear face of the support is preferably oriented diagonally in parallel to the plane of the bicycle. Thus, to move from one position to another, the cyclist needs only to disconnect the support from the base, rotate it 180°, and connect it again.

The support further comprises a front face having a handlebar fixation means. This handlebar fixation means is situated in an asymmetrical position with respect to a plane perpendicular to said rear face and to the plane of the bicycle. This position, which will be disclosed in greater detail with reference to the figures further down in the present document, ensures that the height of the handlebar changes when the support rotates 180° upon passing it from one position to another.

In principle, the handlebar fixation means may be designed in several ways provided the handlebar is fixed sufficiently firmly. For example, in a particularly preferred embodiment of the invention, the handlebar fixation means is simply a cavity shaped as a cylindrical section with an axis perpendicular to the plane of the bicycle and configured to snugly receive a central portion of the handlebar. Naturally, the cylindrical section will have an angular amplitude below 180° to enable the introduction of the central portion of the handlebar, and its inner diameter will be essentially the same as the outer diameter of the central portion of the handlebar.

The fixation of the handlebar to the cylindrical cavity may be carried out in several manners, although in a particularly preferred embodiment of the invention the handlebar fixation means comprises orifices for receiving screws for the fixation of the handlebar. Preferably, these orifices are oriented in perpendicular to the rear face of the support. This orientation is advantageous in that it ensures that the screws inserted into the orifices are oriented in the same direction irrespective of which of the two positions the support is fixed. Consequently, it is ensured that in both positions of the support the handlebar has the same orientation.

### c) Separator

The separator is configured to be optionally fixed between the base and the support. Thereto, the separator comprises a rear face configured for fixation to the front face of the base and a front face configured for fixation to the rear face of the support. The fixation of the separator entails a lengthening of the stem, which thereby can change in length.

The separator may be designed in several shapes, although it preferably has an essentially prismatic shape with the rear face in parallel to the front face. Therefore, the installation f the separator only increases the length of the stem as a whole, but it does not alter a direction of its axis.

Thanks to this structure, the stem assembly of the invention alternates between for distinct configurations, whereby in each of them the height of the handlebar fixation means, and therefore of the handlebar to be fixed thereto, is different. These configurations are the following:
- A first configuration formed only by the base and the support in the first position.
- A second configuration formed only by the base and the support in the second position.
- A third configuration formed by the base, the separator and the support in the first position.
- A fourth configuration formed by the base, the separator and the support in the second position.

In a particularly preferred embodiment of the invention, the base, the support and the separator comprise respective casings that, when the stem assembly is mounted in any of the configurations, form a substantially continuous outer surface having an inner passage for the cables. This feature allows for the cables to be extended in a hidden manner from the handlebar, where the brakes, shifter, light, etc. are located, to the inside of the frame of the bicycle.

To allow for the entrance of said cables, the casing of the stem assembly of the invention, once mounted, may have an inlet orifice for the cables corresponding to brakes, gear shifter and the like. In a preferred embodiment of the invention, an edge of the casing of the front face of the base and an edge of the casing of the front face of the separator comprise respective indentations. Therefore, when the support is fixed to the base or the separator, the indentations make up a window for the introduction of said cables. Even more preferably, an edge of the casing of the rear face of the separator comprises a protrusion configured to fit into the indentation of the front face of the base when the separator is fixed to the base. Thus, when no separator is installed, the indentation of the base makes up the window through which the cables are introduced. On the other hand, when the separator is installed, the indentation of the base is plugged by the protrusion of the separator, and it is the indentation of the separator that in this case makes up the window through which the cables are introduced.

Additionally, a bicycle provided with this stem may have illumination means integrated into the handlebar, in which case the corresponding cables would pass from within said handlebar directly to the inside of the stem through a dedicated orifice provided in a central portion of the handlebar fixation means.

On the other hand, preferably a lower face of the separator comprises a groove between the rear and front faces for the introduction of cables in an inner cavity thereof. This groove makes the introduction of the separator easier when changing the configuration of the stem from a short configuration to a long configuration.

Indeed, when the stem is mounted in a short configuration, the cables run along the stem, from the handlebar to the frame, through inside cavities of the base and the support. When separating the support from the base for introducing the separator, if there was no groove, an end of the cables would have to be disconnected to thereafter introduce said end through the corresponding inside passage of the separator. Now, the separator groove connects the inside passage of the separator with the outside, normally in perpendicular to its front and rear faces. Thus, when passing to a long configuration the separator only needs to be introduced from above, while introducing the cables through the groove, and then the separator only must be normally mechanically connected to the base and the support. Finally, the groove can be sealed by means of a plug to prevent the introduction of debris.

Finally, the first aspect of the present invention is also directed to a bicycle comprising an adjustable stem assembly according to any of the previous claims.

### Second aspect: mounting procedure

The second aspect of the present invention is directed to a mounting procedure of a stem assembly according to the previous paragraphs. This procedure comprises the following steps:
1. Fixing the lower face of the base to a bicycle fork.
2. Optionally, fixing the rear face of the separator to a front face of the base.
3. Fixing, selectively in the first position or in the second position, the rear face of the support to the front face of the base or, if the previous step has previously been carried out, to the front face of the separator.

### Brief description of the figures

The details of the invention are shown in the accompanying figures, which are not intended to limit the scope of the invention:
Fig. 1 shows a schematic view of a bicycle having a conventional stem.
Figs. 2a-2d show respective perspective views of exemplary adjustable stems according to the prior art.
Fig. 3 shows an exploded view of an adjustable stem assembly according to the present invention.
Figs. 4a and 4b show the adjustable stem assembly of the present invention in two different configurations respectively with separator and without separator.
Fig. 5 shows another exploded view of an exemplary adjustable stem assembly according to the invention.
Figs. 6a and 6b show respective views of the adjustable stem assembly in a short low configuration.
Figs. 7a and 7b show respective views of the adjustable stem assembly in a short high configuration.
Figs. 8a and 8b show respective views of the adjustable stem assembly in a long low configuration.
Figs. 9a and 9b show respective views of the adjustable stem assembly in a long high configuration.
Fig. 10 shows a schematic view of a bicycle with the adjustable stem assembly of the present invention.

### Detailed description of the invention

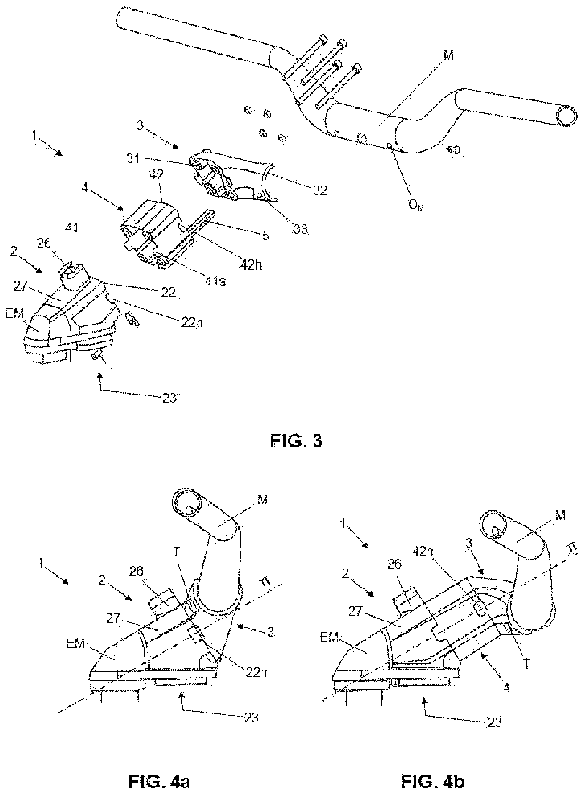

An exemplary stem assembly (1) according to the invention is disclosed with reference to Figs. 3-9.

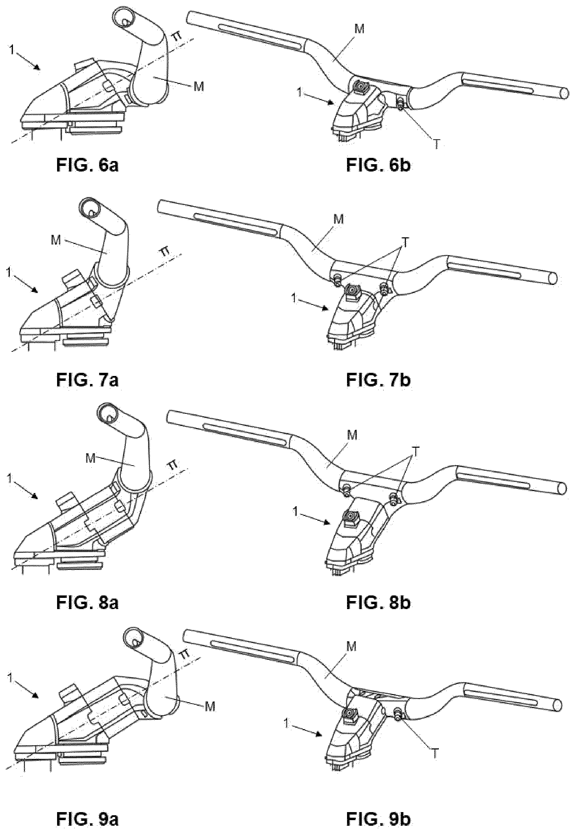

Fig. 3 shows an exploded view of the stem assembly (1), while Figs. 4a and 4b show two side views of the stem assembly (1) mounted according to two different configurations. As shown in these figures, the stem assembly (1) is mainly formed by three parts: base (2), support (3) and separator (4). The base (2) and the support (3) are used in all configurations and, depending on the position of the support (3), enable the assembly to alternate between two configurations herein referred to as "*high*" and "*low*". On the other hand, the introduction of the separator (4) is optional and, when mounted, extends the length of the assembly (1). Thus, when the separator (4) is not mounted, the configuration is referred to as "*short*", while when mounted is referred to as *"long".* In conclusion, depending on the position of the support (3) and on whether the separator (4) is mounted or not, the stem assembly (1) of the invention, when mounted, alternates between four distinct configurations: low short configuration, high short configuration, high long configuration and low long configuration. These configurations are disclosed in detail further down in the present document with reference to Figs. 6-9.

Now, going back to Fig. 3, each of the mentioned elements is disclosed in greater detail below.

### Base (2)

The base (2) is the part connected to the fork (H) of the bicycle (B). In the present example, the base (2) has an essentially prismatic shape having a front face (22), a lower face (23), and an upper face (27). The front face (22) is intended to be fixed to the support (3) or the separator (4) (depending on whether the assembly (1) is mounted respectively in a short or long configuration). The lower face (23) is intended to be fixed to the fork (H) of the bicycle (B). And the upper face (27), as well as the lateral faces with respect to the plane of the bicycle (B), are formed by a casing having a nice aesthetic aspect. In this example, a trim (EM) is fixed directly or indirectly to the frame (C), while the base (2) is rotatable together with the fork (H) and the handlebar (M).

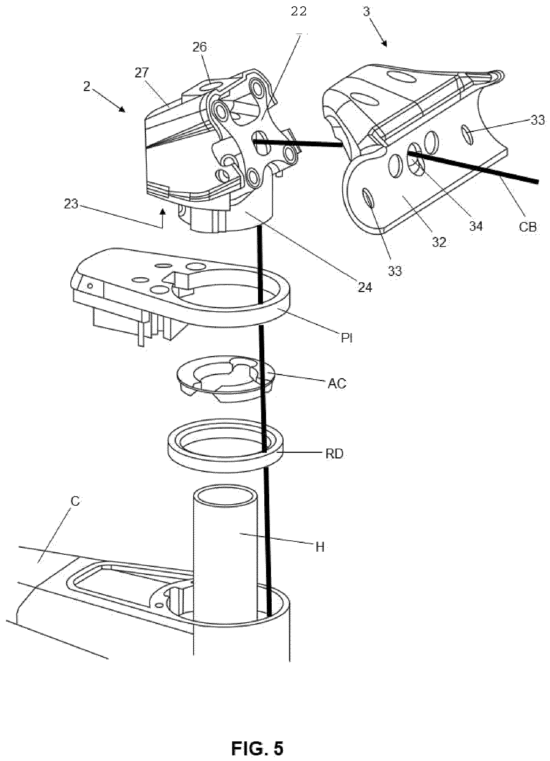

The fixation of the base (2) to the fork (H) is shown in greater detail in Fig. 5. A fork fixation means (24) having a cylindrical shape with a rib protrudes from the lower face (23) of the base (2). This cylindrical fork fixation means (24) is intended to be connected to the upper end of the bicycle fork (H). Fig. 5 shows several additional elements conventionally used in the context of this connection, such as the bearing (RD) and the compression ring (AC), which are not the object of the present application.

Fig. 5 also shows an illumination plate (PI) which is also not the object of the present invention either. The illumination plate (PI) has a rear portion that is rigidly coupled to the frame (C) of the bicycle (B) in an area adjacent the fork (H), and a front portion having an orifice through which the upper end of the fork (H) passes through. This illumination plate (PI) may have a partially transparent casing to provide the bicycle (B) with an integrated position light having a particularly attractive aesthetic aspect. Although not shown in Fig. 5, the trim (EM) is fixed to an upper face of the rear portion of the illumination plate (PI).

On the other hand, the front face (22) of the base (2) is designed for fixation to the support (3) or, in long configurations, to the separator (4). Thereto, it has fixation elements configured to cooperate with the rear faces (31, 41) of the support (3) and the separator (4). The fixation may be implemented in any sufficiently firm manner, normally by means of screws or the like. In this example, the front face (22) of the base (2) is essentially contained in a plane perpendicular to the plane of the bicycle (B) and diagonal with respect to the ground when the assembly (1) is mounted in a bicycle (B) in its natural use position.

The edge of the casing of the front face (22) of the base (2) also has an indentation (22h) that, in the present example, is provided at the side. As shown further down in the present document, this indentation (22h) is intended for the introduction of the cables coming from the handlebar (M) of the bicycle (B), for example, cables from the gear shifter or brakes, when the assembly (1) is in any of the two short configurations. That is, when fixed directly to the support (3), the assembly (1) is configured in such a manner that the indentation (22h) is open, i.e. not sealed, thereby allowing access towards the inside. On the contrary, in the long configurations, the separator (4) comprises means to plug said indentation (22h), and the orifice for the entrance of cables will be placed in a position closer to the handlebar (M).

The upper face (27) only has an aesthetic function. In addition, in the present example a mobile phone fixation element (26) is provided on the upper face (27).

### Separator (4)

As mentioned above, the separator (4) is installed in the assembly (1) in the long configurations. The general shape of the separator (4) is prismatic with an essentially square cross-section and having a rear face (41), a front face (42), and upper, lower and lateral faces. The upper, lower and lateral faces make up the casing of the separator (4), and they are designed such that, when mounted between the base (2) and the support (3), conform together with the casing of said elements a continuous surface having an attractive aesthetic aspect. In the present example, the rear (41) and front (42) faces of the separator (4) are parallel one with respect to another and also to a plane perpendicular to the plane of the bicycle (B) and diagonal with respect to the ground when the assembly (1) is mounted in a bicycle (B) in its natural use position.

The rear face (41) of the separator (4) is configured for fixation to the front face (22) of the base (2). As disclosed earlier, this connection may be implemented by screwing or any other sufficiently rigid means. The edge of the casing of the rear face (41) of the separator (4) further has a protrusion (41s) configured to fit into the indentation (22h) of the front face (22) of the base (2). Thus, when both elements are connected, the indentation (22h) is sealed by the protrusion (41s).

The separator (4) further has a front face (42) that is configured for fixation to the support (3). Again, this fixation can be carried out in any manner provided it is sufficiently firm, although normally screws or the like are employed.

The lower face of the separator (4) further has a groove (not shown in the figures). This groove is perpendicular to the rear (41) and front (42) faces and it extends from one to the other, thereby providing access to the inside of the body of the separator (4). When the separator (4) is installed, the groove is provided essentially in the plane of the bicycle (B). An elongated plug (5) allows for plugging the groove to prevent the entrance of debris from the outside.

The function of this groove is more easily understood from Fig. 5, which shows the trajectory of a cable (CB) coming from an illumination means integrated into the handlebar (M). The configuration shown in Fig. 5 is the short low configuration. If, starting from this configuration, the separator (4) is to be installed to arrive at a long low configuration, then the cable (CB) will need to be routed through the separator (4). To avoid the need to disconnect the cable (CB) to do so, the separator (4) can be placed from above while passing the cable (CB) through the groove. The separator (4) is then fixed between the base (2) and the support (3), and the groove is plugged using the plug (5).

### Support (3)

The support (3) is the forwardmost part of the assembly (1), and therefore the handlebar (M) is fixed thereto by means of a handlebar fixation means (32). The support (3) may be fixed directly to the base (2) in the short configurations, or else to the separator (4) in the long configurations.

In this example, the handlebar fixation means (32) is a cavity shaped as a cylindrical section that, when the assembly (1) is mounted, has the axis in perpendicular to the plane of the bicycle (B). The dimensions of this cavity are intended for the also cylindrical central section of a handlebar (M) to fit. Note that, in this context, the term "*cylindrical*" may encompass transverse sections other than strictly circular, such as e.g. elliptic, oval-shaped, parallelogram-shaped, and the like. In this example, the cavity has orifices (33) complementary to orifices (O_{M}) of the handlebar (M), such that the connection between both elements is carried out by means of screws (T). These orifices (33) are oriented in a direction perpendicular to the plane of the rear face (31). The cavity also has an orifice (34) for the passage of the cable (CB) coming from the illumination means integrated into the handlebar (M).

The support (3) has a rear face (31) configured for fixation to the front face (22) of the base (2), or else to the front face (42) of the separator (4). Thereto, the rear face (31) of the support (3) has means for fixation to the front face (42) of the separator (4), in this case four orifices for screws. Further, in this example, the rear face (31) of the support (3) is essentially contained in a plane that, when the assembly (1) is mounted, is parallel to the planes of the front faces (22, 42) of the base (2) and the separator (4), as well as of the rear face (41) of the separator (4).

Further, to ensure a change in the height of the handlebar (M), the support (3) has an asymmetric shape with respect to a plane (π) perpendicular to the plane of the bicycle (B) and also to the plane of the rear face (31) itself. More specifically, as shown in Figs. 4a and 4b, the handlebar fixation means (32) is placed in an asymmetric manner with respect to said plane (π). Thus, when the support (3) is fixed to the base (2) or separator (4) in a first position, the handlebar fixation means (32) is at a side of plane (π) and, therefore at a certain height. On the other hand, when fixed at a second position separated 180° from the first, the handlebar fixation means (32) is at the opposite side of plane (π) and, in consequence, at a different height. Naturally, in both positions the axis of the cavity making up the handlebar fixation means (32) is perpendicular to the plane of the bicycle (B).

The support (3) also has a casing having a smooth, aesthetically pleasing shape. The edge of this casing is contained in the plane of the rear face (31) of the support (3), without indentations or protrusions. Thereby, when the support (3) is directly connected to the base (2), the indentation (22h) of the front face (22) of the base (2) is left open. Similarly, when the support (3) is connected to the separator (4), the indentation (42h) of the front face (42) of the separator (4) is also left open. In both cases, the indentation (22h, 42h) allows for the introduction of cables for braking, gear shifting and the like into an inner passage of the stem.

Figs. 4a and 4b show two configurations of the stem assembly (1) disclosed above, specifically a short high configuration and a long high configuration.

In the configuration of Fig. 4a the front face (22) of the base (2) is shown fixed to the rear face (31) of the support (3). Since the rear face (31) of the support (3) is contained in a plane, thus essentially lacking indentations or protrusions, the indentation (22h) of the front face (22) of the base (2) is left open, thereby providing an orifice for the introduction of cables for braking and gear shifting. The handlebar (M) is fixed to the cavity making up the handlebar fixation means (32) by means of corresponding screws (T). Also, the support (3) is shown at a first position where the fixation means (32) of the handlebar (M) are situated above plane (π), that is, in the high position. In addition, since the separator (4) is not installed, this is the short high configuration.

The configuration of Fig. 4b is formed by three elements: base (2) support (3) and separator (4). The front face (22) of the base (2) is fixed to the rear face (41) of the separator (4) and the front face (42) of the separator (4) is fixed to the rear face (31) of the support (3). The protrusion (41s) of the rear face (41) of the separator (4) closes the indentation (22h) of the front face (22) of the base (2). On the contrary, the indentation (42h) of the front face (42) of the separator (4) is not closed, and it therefore allows for the entrance of cables for braking and shifting gears. In this case, the position of the support (3) is rotated 180° with respect to the position shown in Fig. 4a, and therefore the handlebar fixation means (32) is situated below plane (π), that is, in the low position. Since there is a separator (4) installed, this configuration is the long low configuration.

These two figures also show how, irrespective of whether the support (3) is in the high position or the low position, the orifices (33) for the screws (T) to connect the handlebar (M) are still aligned in parallel to plane (π). Therefore, the orientation of the handlebar (M) with respect to the ground is the same in both configurations.

Figs. 6-9 show in greater detail respectively the short low configuration (Figs. 6a and 6b), the short high configuration (Figs. 7a and 7b), the long high configuration (Figs. 8a and 8b) and the long low configuration (Figs. 9a and 9b). To install the stem assembly (1) in any of these configurations, the cyclist needs only to:
- First, fix the lower face (23) of the base (2) to the fork (H) of the bicycle (B).
- Then, in case of selecting a long configuration, fixing the rear face (41) of the separator (4) to the front face (22) of the base (2).
- Finally, fixing the rear face (31) of the support (3) directly to the front face (22) of the base (2), in case of selecting a short configuration, or fixing it to the front face (42) of the separator (4), in case of choosing a long configuration.

After fixing the support (3) to the base (2) or to the separator (4), the cyclist will have to fix the handlebar (M) to the support (3). Thereto, he/she will introduce the central section of the handlebar (M) into the cylindrical cavity making up the fixation means (32), ensuring that the position of the orifices (33) of the support (3) match the position of the orifices (O_{M}) of the handlebar (M), and then he/she will introduce the screws (T). If necessary, during this process he/she will pass the cable (CB) through the orifice (34) of the cavity.

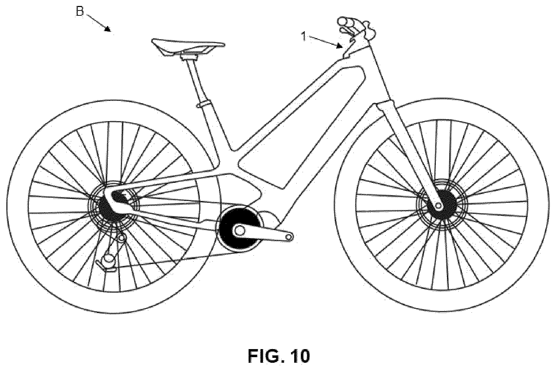

Finally, Fig. 10 shows a bicycle (B) having a stem assembly (1) according to the present invention.

## Claims

1. Adjustable stem assembly (1) for a bicycle (B), comprising:
- a base (2) configured for fixation to the fork (H) of a bicycle (B) and having a front face (22); and
- a support (3) comprising a rear face (31) configured for fixation to the front face (21) of the base (2) alternatively in a first position or a second position and a front face having a handlebar fixation means (32), where the first position and the second position are separated 180° around an axis perpendicular to said rear face (31) of the support (3), and where the handlebar fixation means (32) is situated in an asymmetrical position with respect to a plane (π) perpendicular to said rear face (31) and to the plane of the bicycle (B);
**characterized by** further comprising
- a separator (4) for optional fixation between the base (2) and the support (3), said separator (4) comprising a rear face (41) configured for fixation to the front face (22) of the base (2) and a front face (42) configured for fixation to the rear face (31) of the support (3), such that the stem assembly (1) alternates between:
a first configuration formed only by the base (2) and the support (3) fixed to said base (2) in the first position,
a second configuration formed only by the base (2) and the support (3) fixed to said base (2) in the second position,
a third configuration formed by the base (2), the separator (4) coupled to the base (4), and the support (3) coupled to the separator (4) in the first position, and
a fourth configuration formed by the base (2), the separator (4) coupled to the base (2), and the support (3) coupled to the separator (4) in the second position,
where the height of the handlebar fixation means (32) is different in each of said four configurations.

2. Adjustable stem assembly (1) according to claim 1, where the handlebar fixation means (32) is a cavity shaped as a cylindrical section with an axis perpendicular to the plane of the bicycle (B) configured for a central section of the handlebar (M) to fit into.

3. Adjustable stem assembly (1) according to claim 2, where the handlebar fixation means (32) comprises orifices (33) for screws (T) for fixing the handlebar (M) thereto.

4. Adjustable stem assembly (1) according to claim 3, where the orifices (33) for screws (T) of the handlebar fixation means (32) are oriented in perpendicular to the rear face (31) of the support (3).

5. Adjustable stem assembly (1) according to any of the previous claims, where the separator (4) has an essentially prismatic shape with its rear face (41) parallel to the front face (42).

6. Adjustable stem assembly (1) according to any of the previous claims where, when said assembly (1) is mounted in a bicycle (B), a perpendicular to the rear face (31) of the support (3) is oriented diagonally in parallel to the plane of the bicycle (B).

7. Adjustable stem assembly (1) according to any of the previous claims, where the base (2), the support (3) and the separator (4) comprise respective casings that, when the stem assembly (1) is mounted in any of the configurations, together conform a substantially continuous outer surface having an inner passage for routing cables (CB).

8. Adjustable stem assembly (1) according to claim 7, where an edge of the casing of the front face (22) of the base (2) and an edge of the casing of the front face (42) of the separator (4) comprise respective indentations (22h, 42h), such that, when the support (3) is fixed to the base (2) or to the separator (4), at least one of said indentations (22h, 42h) forms a window in said otherwise substantially continuous outer surface for the introduction of cables (CB).

9. Adjustable stem assembly (1) according to claim 8, where an edge of the casing of the rear face (41) of the separator (4) comprises a protrusion (41s) configured to fit into the indentation (22h) of the front face (22) of the base (2) when the separator (4) is fixed to the base (2).

10. Adjustable stem assembly (1) according to any of the previous claims, where a lower face of the separator (4) comprises a groove between the rear (41) and front (42) face for the introduction of cables (CB) into an inner passage of said separator (4) when installed.

11. Adjustable stem assembly (1) according to any of the previous claims, where a lower face (23) of the base (2) comprises a fork fixation means (24).

12. Adjustable stem assembly (1) according to any of the previous claims, where the base (2) comprises a mobile phone fixation element (26).

13. Bicycle (B) comprising an adjustable stem assembly (1) according to any of the previous claims fixed to the fork (H).

14. Method for mounting the adjustable stem assembly (1) of claim 11 **characterized by** comprising the following steps:
- fixing the lower face (23) of the base (2) to the fork (H) of a bicycle (B);
- optionally, fixing the rear face (41) of the separator (4) to the front face (22) of the base (2); and
- fixing, selectively in the first position or in the second position, the rear face (31) of the support (3) to the front face (22) of the base (2) or, if the previous step has been carried out, to the front face (42) of the separator (4).

## Patentansprüche

1. Verstellbare Lenkervorbau-Baugruppe (1) für ein Fahrrad (B), die Folgendes umfasst:
- einen Träger (2), die zur Befestigung an der Gabel (H) eines Fahrrads (B) ausgestaltet ist und eine Vorderseite (22) aufweist; und
- ein Lager (3), das eine Rückseite (31) umfasst, die so ausgestaltet ist, dass sie alternativ in einer ersten Position oder einer zweiten Position an der Vorderseite (22) des Trägers (2) befestigt werden kann, sowie eine Vorderseite mit einer Lenkstangenbefestigungsvorrichtung (32), wobei die erste Position und die zweite Position um 180° um eine Achse beabstandet sind, die senkrecht zu der Rückseite (31) des Lagers (3) verläuft, und wobei sich die Lenkstangenbefestigungsvorrichtung (32) in einer asymmetrischen Position in Bezug auf eine Ebene (TT) befindet, die senkrecht zur genannten Rückseite (31) und zur Ebene des Fahrrads (B) verläuft;
**dadurch gekennzeichnet, dass** es ferner Folgendes umfasst
- einen Abstandhalter (4) zur optionalen Befestigung zwischen dem Träger (2) und dem Lager (3), wobei der Abstandhalter (4) eine Rückseite (41), die zur Befestigung an der Vorderseite (22) des Trägers (2) ausgestaltet ist, und eine Vorderseite (42) umfasst, die zur Befestigung an der Rückseite (31) des Lagers (3) ausgestaltet ist, sodass die Lenkervorbau-Baugruppe (1) wechselt zwischen:
einer ersten Konfiguration, die ausschließlich aus dem Träger (2) und dem an diesem Träger (2) in der ersten Position befestigten Lager (3) gebildet wird,
einer zweiten Konfiguration, die ausschließlich aus dem Träger (2) und dem an diesem Träger (2) in der zweiten Position befestigten Lager (3) gebildet wird,
einer dritten Konfiguration, die aus dem Träger (2), dem mit dem Träger (2) gekoppelten Abstandhalter (4) und dem mit dem Abstandshalter (4) gekoppelten Lager (3) in der ersten Position gebildet wird, und
einer vierten Konfiguration, die aus dem Träger (2), dem mit dem Träger (2) gekoppelten Abstandhalter (4) und dem mit dem Abstandhalter (4) gekoppelten Lager (3) in der zweiten Position gebildet wird,
wobei die Höhe der Lenkstangenbefestigungsvorrichtung (32) in jeder der vier Konfigurationen unterschiedlich ist.

2. Verstellbare Lenkervorbau-Baugruppe (1) gemäß Anspruch 1, wobei die Lenkstangenbefestigungsvorrichtung (32) eine als zylindrischer Abschnitt ausgebildete Aussparung mit einer zur Ebene des Fahrrads (B) senkrechten Achse ist, die zur Einpassung eines Mittelabschnitts des Lenkers (M) ausgestaltet ist.

3. Verstellbare Lenkervorbau-Baugruppe (1) gemäß Anspruch 2, wobei die Lenkstangenbefestigungsvorrichtung (32) Öffnungen (33) für Schrauben (T) zur Befestigung des Lenkers (M) daran umfasst.

4. Verstellbare Lenkervorbau-Baugruppe (1) gemäß Anspruch 3, wobei die Öffnungen (33) für Schrauben (T) der Lenkstangenbefestigungsvorrichtung (32) senkrecht zur Rückseite (31) des Lagers (3) ausgerichtet sind.

5. Verstellbare Lenkervorbau-Baugruppe (1) gemäß einem der vorstehenden Ansprüche, wobei der Abstandhalter (4) eine im Wesentlichen prismatische Form aufweist, wobei seine Rückseite (41) parallel zur Vorderseite (42) verläuft.

6. Verstellbare Lenkervorbau-Baugruppe (1) gemäß einem der vorstehenden Ansprüche, wobei, wenn die besagte Baugruppe (1) an einem Fahrrad (B) montiert ist, eine Senkrechte zur Rückseite (31) des Lagers (3) diagonal parallel zur Ebene des Fahrrads (B) verläuft.

7. Verstellbare Lenkervorbau-Baugruppe (1) gemäß einem der vorstehenden Ansprüche, wobei der Träger (2), das Lager (3) und der Abstandhalter (4) jeweils Gehäuse umfassen, die, wenn die Lenkervorbau-Baugruppe (1) in einer der Konfigurationen montiert ist, gemeinsam eine im Wesentlichen durchgehende Außenfläche mit einem inneren Durchgang zur Führung von Kabeln (CB) bilden.

8. Verstellbare Lenkervorbau-Baugruppe (1) gemäß Anspruch 7, wobei eine Kante des Gehäuses der Vorderseite (22) des Trägers (2) und eine Kante des Gehäuses der Vorderseite (42) des Abstandhalters (4) jeweils Vertiefungen (22h, 42h) umfassen, so dass, wenn das Lager (3) an dem Träger (2) oder am Abstandhalter (4) befestigt ist, mindestens eine der genannten Vertiefungen (22h, 42h) ein Fenster in der ansonsten im Wesentlichen durchgehenden Außenfläche zum Einführen von Kabeln (CB) bildet.

9. Verstellbare Lenkervorbau-Baugruppe (1) gemäß Anspruch 8, wobei eine Kante des Gehäuses der Rückseite (41) des Abstandhalters (4) einen Vorsprung (41s) umfasst, der so ausgestaltet ist, dass er in die Vertiefung (22h) der Vorderseite (22) des Trägers (2) einpasst, wenn der Abstandhalter (4) am Träger (2) befestigt ist.

10. Verstellbare Lenkervorbau-Baugruppe (1) gemäß einem der vorstehenden Ansprüche, wobei eine Unterseite des Abstandhalters (4) eine Nut zwischen der Rückseite (41) und der Vorderseite (42) umfasst, um Kabel (CB) in einen inneren Durchgang des Abstandhalters (4) einzuführen, sofern dieser eingebaut ist.

11. Verstellbare Lenkervorbau-Baugruppe (1) gemäß einem der vorstehenden Ansprüche, wobei eine Unterseite (23) des Trägers (2) eine Gabelbefestigungsvorrichtung (24) umfasst.

12. Verstellbare Lenkervorbau-Baugruppe (1) gemäß einem der vorstehenden Ansprüche, wobei der Träger (2) ein Befestigungselement (26) für ein Mobiltelefon umfasst.

13. Fahrrad (B), das eine verstellbare Lenkervorbau-Baugruppe (1) gemäß einem der vorstehenden Ansprüche umfasst, die an der Gabel (H) befestigt ist.

14. Verfahren zur Anbringung der verstellbaren Lenkervorbau-Baugruppe (1) gemäß Anspruch 11 **dadurch gekennzeichnet, dass** es die folgenden Schritte umfasst:
- Befestigung der Unterseite (23) des Trägers (2) an der Gabel (H) eines Fahrrads(B);
- optional die Befestigung der Rückseite (41) des Abstandhalters (4) an der Vorderseite (22) des Trägers (2); und
- Befestigung der Rückseite (31) des Lagers (3) wahlweise in der ersten Position oder in der zweiten Position an der Vorderseite (22) des Trägers (2) oder, sofern der vorherige Schritt durchgeführt wurde, an der Vorderseite (42) des Abstandhalters (4).

## Revendications

1. Ensemble de potence réglable (1) pour bicyclette (B), comprenant :
- une base (2) configurée pour être fixée à la fourche (H) d'une bicyclette (B) et présentant une face avant (22) ; et
- un support (3) comprenant une face arrière (31) configurée pour être fixée à la face avant (22) de la base (2), alternativement dans une première position ou dans une seconde position, ainsi qu'une face avant comportant un moyen de fixation du guidon (32), la première position et la seconde position étant décalées de 180° autour d'un axe perpendiculaire à ladite face arrière (31) du support (3), et le moyen de fixation du guidon (32) étant disposé de manière asymétrique par rapport à un plan (n) perpendiculaire à ladite face arrière (31) et au plan de la bicyclette (B),
**caractérisé en ce qu'**il comprend en outre :
une entretoise (4) destinée à être fixée de manière optionnelle entre la base (2) et le support (3), ladite entretoise (4) comprenant une face arrière (41) configurée pour être fixée à la face avant (22) de la base (2) et une face avant (42) configurée pour être fixée à la face arrière (31) du support (3), de sorte que l'ensemble de potence (1) peut avoir diverses configurations :
une première configuration, constituée uniquement de la base (2) et du support (3) fixé à ladite base (2) dans la première position ;
une deuxième configuration, constituée uniquement de la base (2) et du support (3) fixé à ladite base (2) dans la seconde position ;
une troisième configuration, constituée de la base (2), de l'entretoise (4) couplée à la base (2) et du support (3) couplé à l'entretoise (4) dans la première position ; et
une quatrième configuration, constituée de la base (2), de l'entretoise (4) couplée à la base (2) et du support (3) couplé à l'entretoise (4) dans la seconde position,
la hauteur du moyen de fixation du guidon (32) étant différente dans chacune desdites quatre configurations.

2. Ensemble de potence réglable (1) conformément à la revendication 1, dans lequel le moyen de fixation du guidon (32) est une cavité en forme de segment cylindrique avec un axe perpendiculaire au plan de la bicyclette (B), configurée pour recevoir une partie centrale du guidon (M).

3. Ensemble de potence réglable (1) conformément à la revendication 2, dans lequel le moyen de fixation du guidon (32) comprend des orifices (33) destinés à recevoir des vis (T) pour la fixation du guidon (M).

4. Ensemble de potence réglable (1) conformément à la revendication 3, dans lequel les orifices (33) destinés aux vis (T) du moyen de fixation du guidon (32) sont orientés perpendiculairement à la face arrière (31) du support (3).

5. Ensemble de potence réglable (1) selon l'une quelconque des revendications précédentes, dans lequel l'entretoise (4) présente une forme essentiellement prismatique, sa face arrière (41) étant parallèle à sa face avant (42).

6. Ensemble de potence réglable (1) selon l'une quelconque des revendications précédentes, dans lequel, lorsque ledit ensemble (1) est monté sur une bicyclette (B), une perpendiculaire à la face arrière (31) du support (3) est orientée obliquement, parallèlement au plan de la bicyclette (B).

7. Ensemble de potence réglable (1) selon l'une quelconque des revendications précédentes, dans lequel la base (2), le support (3) et l'entretoise (4) comprennent des enveloppes respectives qui, lorsque l'ensemble de potence (1) est monté dans l'une quelconque desdites configurations, forment ensemble une surface extérieure sensiblement continue délimitant un passage interne destiné au cheminement de câbles (CB).

8. Ensemble de potence réglable (1) conformément à la revendication 7, dans lequel un bord de l'enveloppe de la face avant (22) de la base (2) et un bord de l'enveloppe de la face avant (42) de l'entretoise (4) comprennent respectivement des échancrures (22h, 42h), de sorte que, lorsque le support (3) est fixé à la base (2) ou à l'entretoise (4), au moins l'une desdites échancrures (22h, 42h) forme une fenêtre dans ladite surface extérieure par ailleurs sensiblement continue, permettant l'introduction des câbles (CB).

9. Ensemble de potence réglable (1) conformément à la revendication 8, dans lequel un bord de l'enveloppe de la face arrière (41) de l'entretoise (4) comprend une saillie (41s) configurée pour s'engager dans l'échancrure (22h) de la face avant (22) de la base (2) lorsque l'entretoise (4) est fixée à la base (2).

10. Ensemble de potence réglable (1) selon l'une quelconque des revendications précédentes, dans lequel une face inférieure de l'entretoise (4) comprend une rainure s'étendant entre la face arrière (41) et la face avant (42), destinée à permettre l'introduction des câbles (CB) dans un passage interne de ladite entretoise (4) lorsqu'elle est installée.

11. Ensemble de potence réglable (1) selon l'une quelconque des revendications précédentes, dans lequel une face inférieure (23) de la base (2) comprend un moyen de fixation à la fourche (24).

12. Ensemble de potence réglable (1) selon l'une quelconque des revendications précédentes, dans lequel la base (2) comprend un élément de fixation pour téléphone mobile (26).

13. Bicyclette (B) comprenant un ensemble de potence réglable (1) selon l'une quelconque des revendications précédentes, fixé à la fourche (H).

14. Procédé de montage de l'ensemble de potence réglable (1) conformément à la revendication 11, **caractérisé en ce qu'**il comprend les étapes consistant à :
• fixer la face inférieure (23) de la base (2) à la fourche (H) d'une bicyclette (B) ;
• fixer, de manière optionnelle, la face arrière (41) de l'entretoise (4) à la face avant (22) de la base (2) ; et
• fixer sélectivement, dans la première position ou dans la seconde position, la face arrière (31) du support (3) à la face avant (22) de la base (2) ou, si l'étape précédente a été réalisée, à la face avant (42) de l'entretoise (4).
